# EUROPEAN PATENT APPLICATION

(11) **EP 4 460 042 A1**
(43) Date of publication of application: **06.11.2024**
(21) Application number: 21969486.6
(22) Date of filing: 29.12.2021
(51) Int. Cl.: H04W 4/02, H04W 36/00, H04L 5/00

(54) **MEASUREMENT GAP CONFIGURATION METHOD AND APPARATUS**

(71) Applicant: Beijing Xiaomi Mobile Software Co., Ltd., Beijing 100085 (CN)
(72) Inventor: XIONG, Yi, Beijing 100085 (CN)
(74) Representative: Dehns Germany Partnerschaft mbB
(86) International application number: PCT/CN2021/142679
(87) International publication number: WO 2023/123118

(57) **Abstract**

Embodiments of the present application disclose a measurement gap configuration method and an apparatus, applicable to the technical field of communications. A method executed by a terminal device comprises: receiving measurement configuration information of a network device, wherein the measurement configuration information comprises configuration parameters of a plurality of measurement gaps and a measurement gap sharing configuration; and determining a use mode of the measurement gap sharing configuration. Thus, the terminal device can determine the use mode of the measurement gap sharing configuration according to the configuration parameters of the measurement gaps and/or the measurement gap sharing configuration, thereby enhancing the measurement gaps.

## Description

### TECHNICAL FIELD

The present disclosure relates to the technical field of communications, and particularly to a method and an apparatus for configuring a measurement gap.

### BACKGROUND

In the related art, the measurement gap sharing configuration (measGapSharingConfig) is configured based on a terminal device, which receives a measurement configuration (measConfig). The measConfig includes a measGapSharingConfig message. Since each terminal device may only be configured with either a per UE gap, or a per frequency range (FR) gap, including a FR1 Gap and a FR2 Gap. The measGapSharingConfig may contain a corresponding measurement gap sharing scheme, and both the per UE gap and the per FR gap may adapt to an appropriate measurement gap sharing configuration.

### SUMMARY

Embodiments of the present disclosure provides a method and an apparatus for configuring a measurement gap. The terminal device can determine a usage mode of the measurement gap sharing configuration according to configuration parameters of the measurement gap and/or the measurement gap sharing configuration, which achieves the enhancement of the measurement gaps.

According to a first aspect of embodiments of the present disclosure, a method for configuring a measurement gap is provided, performed by a terminal device, including: receiving measurement configuration information from a network device, in which the measurement configuration information includes a plurality of configuration parameters for the measurement gap and a measurement gap sharing configuration; and determining a usage mode of the measurement gap sharing configuration.

By implementing embodiments of the present disclosure, the terminal device receives measurement configuration information of the network device, in which the measurement configuration information includes the plurality of configuration parameters for the measurement gap and the measurement gap sharing configuration, and determines the usage mode of the measurement gap sharing configuration, Thus, the terminal device can determine the usage mode of the measurement gap sharing configuration according to the configuration parameters of the measurement gaps and/or the measurement gap sharing configuration, which achieves the enhancement of the measurement gaps.

According to a second aspect of embodiments of the present disclosure, another method for configuring a measurement gap is provided, performed by a network device, including: sending to the terminal device measurement configuration information for determining a usage mode of a measurement gap sharing configuration, in which the measurement configuration information includes a plurality of configuration parameters for the measurement gap and a measurement gap sharing configuration.

According to a third aspect of embodiments of the present disclosure, a communication apparatus is provided, which has a function of realizing some or all of the functions of the terminal device in the method described in the first aspect. For example, the functions of the communication apparatus may have the functions in some or all embodiments in the present disclosure, or may have the functions which implement any one of the embodiments in the present disclosure alone. The functions may be realized by hardware or by hardware executing corresponding software. The hardware or software includes one or more units or modules corresponding to the functions described above.

In an implementation, the structure of the communication apparatus may include a transceiver module. The transceiver module is configured to support communications between the communication apparatus and other devices. The communication apparatus may further include a storage module coupling with the transceiver module and the processing module, which stores the necessary computer programs and data of the communication apparatus.

As an example, the processing module may be a processor, the transceiver module may be a transceiver or a communication interface, and the storage module may be a memory.

In an implementation, the communication apparatus includes: a transceiver module, configured to receive measurement configuration information from a network device, in which the measurement configuration information includes a plurality of configuration parameters for the measurement gap and a measurement gap sharing configuration; and a processing module, configured to determine a usage mode of the measurement gap sharing configuration.

According to a fourth aspect of embodiments of the present disclosure, a communication apparatus is provided, which has a function of realizing some or all of the functions of the network device in the method described in the second aspect. For example, the functions of the communication apparatus may have the functions in some or all embodiments in the present disclosure, or may have the functions which implement any one of the embodiments in the present disclosure alone. The functions may be realized by hardware or by hardware executing corresponding software. The hardware or software includes one or more units or modules corresponding to the functions described above.

In an implementation, the structure of the communication apparatus may include a transceiver module. The transceiver module is configured to support communications between the communication apparatus and other devices. The communication apparatus may further include a storage module coupling with the transceiver module and the processing module, which stores the necessary computer programs and data of the communication device.

In an implementation, the communication apparatus includes: a transceiver module, configured to transmit to the terminal device measurement configuration information for determining a usage mode of the measurement gap sharing configuration, in which the measurement configuration information includes a plurality of configuration parameters for the measurement gap and a measurement gap sharing configuration.

According to a fifth aspect of embodiments of the present disclosure, a communication device is provided, which includes a processor. When the processor calls a computer program in the memory, the method according to the first aspect is performed.

According to a sixth aspect of embodiments of the present disclosure, a communication device is provided, which includes a processor. When the processor calls a computer program in the memory, the method according to the second aspect is performed.

According to a seventh aspect of embodiments of the present disclosure, a communication device is provided, which includes a processor and a memory. The memory is stored with a computer program; and the processor executes the computer program stored in the memory, so that the communication device performs the method according to the first aspect.

According to an eighth aspect of embodiments of the present disclosure, a communication device is provided, which includes a processor and a memory. The memory is stored with a computer program; and the processor executes the computer program stored in the memory, so that the communication device performs the method according to the second aspect.

According to a ninth aspect of embodiments of the present disclosure, a communication device is provided, which includes a processor and an interface circuit. The interface circuit is configured to receive code instructions and transmit the code instructions to the processor; and the processor is configured to run the code instructions so that the device performs the method according to the above first aspect.

According to a tenth aspect of embodiments of the present disclosure, a communication device is provided, which includes a processor and an interface circuit. The interface circuit is configured to receive code instructions and transmit the code instructions to the processor; and the processor is configured to run the code instructions so that the device performs the method according to the above second aspect.

According to an eleventh aspect of embodiments of the present disclosure, a communication system is provided, which includes the communication apparatus according to the third aspect and the communication apparatus according to the fourth aspect, or the system includes the communication device according to the fifth aspect and the communication device according to the sixth aspect, or the system includes the communication device according to the seventh aspect and the communication device as described in the eighth aspect, or the system includes the communication device according to the ninth aspect and the communication device according to the tenth aspect.

According to a twelfth aspect of embodiments of the present disclosure, a computer-readable storage medium is provided, which is configured to store instructions used by the terminal device. When the instructions are executed, the terminal device is caused to perform the method according to the first aspect.

According to a thirteenth aspect of embodiments of the present disclosure, a readable storage medium is provided, which is configured to store instructions used by the network device. When the instructions are executed, the network device is caused to perform the method according to the second aspect.

According to a fourteenth aspect of embodiments of the present disclosure, a computer program product including a computer program is provided. When the computer program is running on a computer, the computer is caused to perform the method according to the first aspect.

According to a fifteenth aspect of embodiments of the present disclosure, a computer program product including a computer program is provided. When the computer program is running on a computer, the computer is caused to perform the method according to the second aspect.

According to a sixteenth aspect of embodiments of the present disclosure, a system on chip (SOC) is provided, which includes at least one processor and an interface, and is configured to support a terminal device to perform the functions involved in the first aspect, for example, to determine or process at least one of data and information involved in the above methods. In a possible design, the SOC further includes a memory. The memory is configured to save a necessary computer program and data of the terminal device. The SOC may include a chip, or may include a chip and other discrete devices.

According to a seventeenth aspect of embodiments of the present disclosure, a system on chip (SOC) is provided, which includes at least one processor and an interface, and is configured to support a network device to perform the functions involved in the second aspect, for example, to determine or process at least one of data and information involved in the above methods. In a possible design, the SOC further includes a memory. The memory is configured to save a necessary computer program and data of the network device. The SOC may include a chip, or may include a chip and other discrete devices.

According to an eighteenth aspect of embodiments of the present disclosure, a computer program product including a computer program is provided. When a computer program is running on a computer, the computer is caused to perform the method according to the first aspect.

According to a nineteenth aspect of embodiments of the present disclosure, a computer program product including a computer program is provided. When the computer program is running on a computer, the computer is caused to perform the method according to the second aspect.

### BRIEF DESCRIPTION OF THE DRAWINGS

In order to explain technical solutions in the embodiments of the disclosure or the related art more clearly, the drawings described in the embodiments of the disclosure or required in the related art will be briefly introduced below.
FIG. 1 is a diagram illustrating an architecture of a communication system according to embodiments of the present disclosure.
FIG. 2 is a flowchart illustrating a method for configuring a measurement gap according to embodiments of the present disclosure.
FIG. 3 is a flowchart illustrating another method for configuring a measurement gap according to embodiments of the present disclosure.
FIG. 4 is a flowchart illustrating yet another method for configuring a measurement gap according to embodiments of the present disclosure.
FIG. 5 is a flowchart illustrating yet another method for configuring a measurement gap according to embodiments of the present disclosure.
FIG. 6 is a flowchart illustrating yet another method for configuring a measurement gap according to embodiments of the present disclosure.
FIG. 7 is a structure diagram illustrating a communication apparatus according to embodiments of the present disclosure.
FIG. 8 is a structure diagram illustrating another communication apparatus according to embodiments of the present disclosure.
FIG. 9 is a structure diagram illustrating yet another communication apparatus according to embodiments of the present disclosure.
FIG. 10 is a structure diagram illustrating another communication device according to embodiments of the present disclosure.
FIG. 11 is a structure diagram illustrating a chip according to embodiments of the present disclosure.

### DETAILED DESCRIPTION

The technical solutions in the present disclosure may be described below in conjunction with the accompanying drawings.

Unless otherwise defined, all technical and scientific terms used herein have the same meaning as commonly understood by those skilled in the art falling within the disclosure. The terms used herein in the specification of the present disclosure are used only for the purpose of describing specific embodiments and are not intended to limit the present disclosure.

In order to understand the embodiments of the present disclosure better, some related concepts are first described below.

### 1. measurement configuration

In the measurement configuration phase, the network device sends information required for the measurement to the terminal device (e.g., UE) via signaling. For example, in a connected state, a radio resource control (RRC) reconfiguration signaling may be used to send the information required for the measurement. The measurement configuration information is included within a measurement configuration element of the RRC reconfiguration message.

It is understood that, a corresponding measurement object is configured for each frequency to be measured and a corresponding reference signal in the measurement configuration. Only if the corresponding measurement object, reporting configuration and quantity configuration have been configured to the UE, the network device configures a measurement ID to associate the corresponding measurement object and reporting configuration.

After receiving the signaling sent by the network device, the UE modifies measurement configurations and measurement report lists accordingly that are stored in the UE and informs the network device of a message for successful modification. The UE sends the RRC reconfiguration complete signaling to the network device after receiving the RRC reconfiguration signaling. The RRC reconfiguration complete signaling indicates that the measurement configurations are successfully modified.

As an example, the measurement configuration information may include the configuration information indicated in 1) to 5) below.

### 1) measurement object (MO)

The MO defines a measurement target, which includes a MO ID and a specific configuration corresponding to the measurement target. In long term evolution (LTE) systems, the MO corresponds to one frequency point. In a MO configuration of one frequency point, the network device informs the UE about the information needed to be known for the measurement of the frequency point, for example, a configuration of measurement resources on the frequency point and a list of cells on the frequency point.

In the NR system, for both intra-frequency and inter-frequency measurements, the MO configuration indicates information about reference signals to be measured, such as a frequency/time domain location, a subcarrier spacing, and the like. For an inter-system E-UTRA measurement, each MO corresponds to one E-UTRA frequency point. E-UTRA refers to an access network portion in the LTE system. The full form of E-UTRA is evolved UMTS terrestrial radio access network, where the abbreviation UMTS stands for universal mobile telecommunication system.

### 2) reporting configuration

A reporting configuration includes a specific configuration for a measurement reporting ID and a corresponding measurement reporting criteria. In the reporting configuration, the network device informs the UE of the details of the measurement to be performed, including a type of measurement, a reporting trigger method, and a reporting format.

### 3)measurement identity

A measurement identity is a separate ID, and one measurement identity is a combination of one MO and one reporting configuration. The combination of the MO and the reporting configuration identifies various details of the measurement of the MO. Any MO/reporting configuration can be associated with any one MO/reporting configuration with the same radio access type (RAT) type, or a plurality of MOs/reporting configurations with the same RAT type, or zero MO/reporting configuration with the same RAT type.

### 4) quantity configuration

The quantity configuration refers to a configuration of the Layer 3 filter coefficients. Before triggering a quantity for verifying whether the reporting trigger conditions are met, and before the quantity is finally reported, layer 3 filtering needs to be performed first. The layer 3 filter coefficients are informed to the UE through the quantity configuration.

### 5) measurement gap configuration

If the measurement of the intra-frequency/inter-frequency/inter-system involves in switching a center frequency, the measurement and data transmission cannot be carried out at the same time. In this case, the network needs to configure a measurement gap for the UE.

The measurement task is identified by a measurement ID (measID), and the measID is associated with one MO and one report configuration (reportConfig).

### 2. measurement gap

The measurement gap is a period during which the network device configures the UE not to need a reception of physical downlink control channel (PDCCH)/physical downlink shared channel (PDSCH) and not to need a transmission of physical uplink control channel (PUCCH)/physical uplink shared channel (PUSCH).

For a UE in the connected state, the measurement and the data transmission and reception with a serving cell may not be performed simultaneously due to a need for radio frequency (RF) switching during the measurement. Currently, the network device configures the UE with a measurement gap in the measurement configuration, during which data transmission and reception between the UE and the serving cell is not required, thus enabling the UE to perform the measurement.

In related art, the measurement gap configuration (measConfig) is carried in the measurement configuration (measConfig).

As an example, in the NR system, the measConfig may include the following information:

### (1) measurement gap type

A gap type includes gap UE, gapFR1, and gapFR2. The gap UE indicates a per UE gap, gapFR1 indicates a FR1 Gap, gapFR2 indicates a FR2 Gap.

FR1 and FR2 are two frequency ranges (FR). In the 3GPP protocol, the overall spectrum resources for 5G can be divided into two frequency bands FR1 and FR2.

FR1 indicates a frequency band with a frequency below 6 GHz. The frequency band below 6 GHz can be called sub 6G. FR1 can be called a low frequency band which is a primary frequency band for 5G.

The frequency band below 3 GHz can be called sub 3G and the rest of the frequency band can be called C-band.

FR2 indicates a frequency band with a frequency above 6GHz. The frequency band above 6 GHz can also be called a millimeter wave above 6 GHz. FR2 can be called a high frequency band, which is an extended frequency band for 5G.

In this case, the per UE gap refers to a measurement gap applicable to both FR1 and FR2.

In the per UE gap, the UE is not needed to transmit, the UE is not needed to receive data from any service cell other than a reference signal used for the measurement, and the UE is not needed to switch the frequency point to the frequency point of any service cell.

The per UE gap can be regarded as interrupting data transmission from all service cells of the UE.

The per FR gap defines a set of measurement gap styles for the frequency bands FR1 and FR2 respectively, and each set of measurement gap styles will be only applicable to the corresponding frequency band. Gap FR1 indicates that the measurement gap is applicable to FR1, and Gap FR2 indicates that the measurement gap is applicable to FR2.

In the per FR gap, the UE is not needed to transmit data to the cell on the corresponding frequency band, the UE is not needed to receive data from any serving cell on the corresponding frequency band, except the reference signal used for measurement, and the UE is not needed to switch the frequency point to the frequency point of any serving cell on the corresponding frequency band.

The per FR gap may be regarded as interrupting only data transmission of the UE with the service cell on the corresponding FR. For example, during the per FR1 gap, the UE does not perform data transmission with the serving cell on FR1 and may perform data transmission with the serving cell on FR2. As another example, during the per FR2 gap, the UE does not perform data transmission with the serving cell on FR2 and may perform data transmission with the serving cell on FR1.

In the related art, gap capability reporting of the UE is not supported. Except for special scenarios specified by protocols, such as "the SSB to be measured is in an active BWP" or "the active BWP is also the initial BWP for intra-frequency measurement," or "the UE supports the per FR gap and the frequency point to be measured is not in the same frequency range as a serving frequency point", the network device always configures measurement gaps for the UE.

In the related art, the measurement gap is configured based on the UE, and the measurement gap configured by the network device for each UE may have only one set of measurement gap configuration for each measurement gap type. For example, the network device can configure the per FR1 gap for each UE, or can configure another per FR2 gap.

In order to understand the method and apparatus for configuring a measurement gap in the embodiments of the disclosure better, a communication system to which embodiments of the present disclosure are applicable is described below.

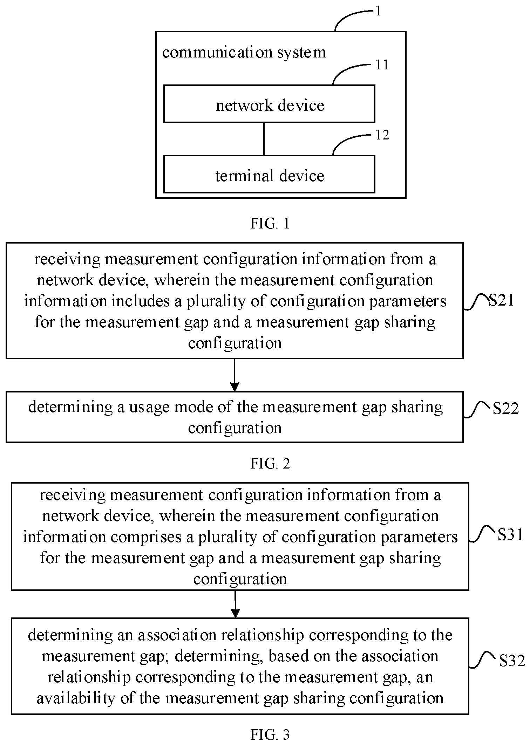

Referring to FIG. 1, it is a diagram illustrating an architecture of a communication system according to embodiments of the present disclosure. The communication system may include, but is not limited to, one network device and one terminal device. A number and a form of the devices shown in FIG. 1 are only for example and do not constitute a limitation to embodiments of the present disclosure, and two or more network devices and two or more terminal devices may be included in practical applications. The communication system 100 as illustrated in FIG. 1 includes one network device 11 and one terminal device 12 for example.

It needs to be noted that the technical solution in embodiments of the present disclosure is applicable to various communication systems., for example, a long term evolution (LTE) system, a 5th generation (5G) mobile communication system, a 5G new radio (NR) system or other future new mobile communication systems.

The network device 11 in embodiments of the disclosure is an entity for transmitting or receiving a signal at a network side. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. A specific technology and a specific device form adopted by the network device are not limited in embodiments of the present disclosure. The network device according to embodiments of the present disclosure may consist of a central unit (CU) and a distributed unit (DU). The CU may also be referred to as a control unit. The protocol layers of a network device such as a base station may be split by using a structure of the CU-DU, so that the functions for a part of the protocol layers are placed in the CU for centralized control, and functions of a remaining part or all of the protocol layers are distributed in the DU, and the DU is centrally controlled by the CU.

The terminal device 12 in embodiments of the disclosure is an entity for receiving or transmitting a signal at a user side, for example, a mobile phone. The terminal device may be referred to as a terminal, a user equipment (UE), a mobile station (MS), a mobile terminal (MT), etc. The terminal device may be an automobile with a communication function, a smart automobile, a mobile phone, a wearable device, a tablet computer (Pad), a computer with a wireless transceiving function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in transportation safety, a wireless terminal device in a smart home, etc. A specific technology adopted by the terminal device and a specific device form adopted by the terminal device are not limited in embodiments of the present disclosure.

It may be understood that, the communication system described in embodiments of the present disclosure are intended to explain technical solutions of embodiments of the present disclosure more clearly, and does not constitute a limitation to the technical solutions provided by embodiments of the present disclosure. Those skilled in the art know that, with evolution of a system architecture and emergence of a new business scenario, the technical solutions provided in embodiments of the present disclosure are equally applied to similar technical problems.

A method and an apparatus for configuring a measurement gap in the disclosure are described in combination with attached drawings.

In the related art, a plurality of concurrent measurement gaps are introduced, where each measurement gap may correspond to one or more different frequency points, and a part of measurement gaps may not be simultaneously associated with intra-frequency and inter-frequency measurement, or may not be simultaneously associated with intra-frequency measurement and inter-RAT measurement. The measurement gap sharing configuration in the related art determines a measurement opportunity percentage of intra-frequency and inter-frequency measurement, or a measurement opportunity percentage of intra-frequency measurement and inter-RAT measurement. If the measurement gap sharing configuration is still used in the plurality of concurrent measurement gaps, the unassociated intra-frequency and inter-frequency measurement, or the unassociated intra-frequency measurement and inter-RAT measurement may not perform related measurement on the corresponding measurement opportunities, which can lead to wasting the measurement opportunities.

The intra-frequency measurement refers to a situation where a frequency point of a target cell to be measured is the same as a frequency point of a current serving cell. The inter-frequency measurements refers to a situation where a frequency point of the target cell to be measured is different from a frequency point of the current serving cell. The inter-RAT measurement refers to a situation where a network type of the target cell to be measured is different from a network type of the current serving cell.

In view of the above, an embodiment of the present disclosure provides a method for configuring a measurement gap to address the problem that unassociated intra-frequency and inter-frequency measurement, or unassociated intra-frequency measurements and inter-RAT measurement may not perform related measurement on the corresponding measurement opportunity, thus leading to resource wastage.

Referring to FIG. 2, it is a flowchart illustrating a method for configuring a measurement gap according to embodiments of the present disclosure.

As shown in FIG. 2, the method is executed by a terminal device, which may include, but is not limited to the following steps S21-S22.

At S21, measurement configuration information is received from a network device, in which the measurement configuration information includes a plurality of configuration parameters for the measurement gap and a measurement gap sharing configuration.

In an embodiment of the present disclosure, the measurement configuration information received by the terminal device from the network device may be measConfig. The terminal device receives the measConfig from the network device in a RRC reconfiguration message.

The measConfig includes a measurement gap sharing configuration, and the measurement gap sharing configuration may be measGapSharingConfig. The measConfig includes a plurality of configuration parameters for the measurement gap.

In some embodiments, the measurement configuration information includes a measurement gap sharing configuration applicable to all the measurement gaps.

In some embodiments, each measurement gap or each measurement gap group has an independent measurement gap sharing configuration.

In an embodiment of the present disclosure, there may be a correspondence relationship between the measurement gap and the measurement gap sharing configuration. Each measurement gap corresponds to an independent measurement gap sharing configuration, or a plurality of measurement gaps form a measurement gap group, and the measurement gap group corresponds to an independent measurement gap sharing configuration.

In some embodiments, an information element (IE) corresponding to the measurement gap indicates a measurement gap sharing configuration corresponding to the measurement gap.

In an example, the measurement gap sharing configuration corresponding to the measurement gap may be included in IEs (such as MeasGapConfig, MeasGapConfigList, gap configuration (GapConfig)) corresponding to the measurement gap.

In an example, an ID of the measurement gap sharing configuration corresponding to the measurement Gap may be included in IEs (such as MeasGapConfig, MeasGapConfigList, GapConfig) corresponding to the measurement Gap.

The following is an example: 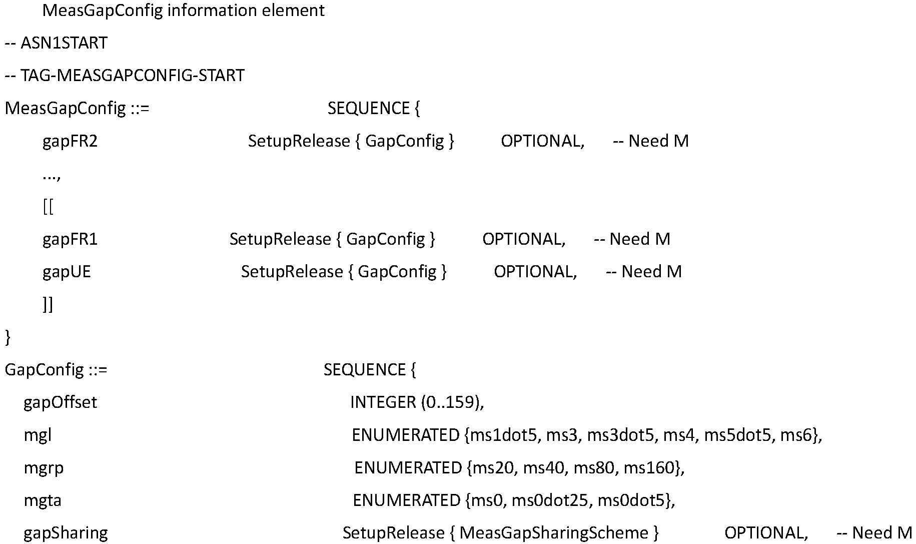 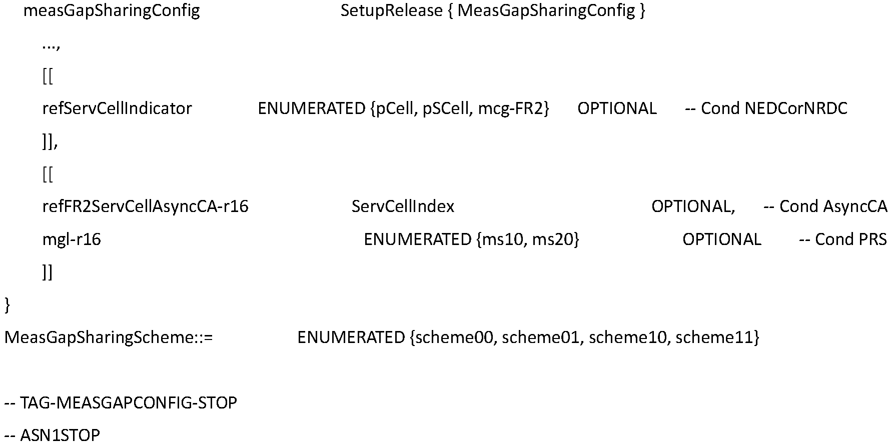 where 'gapsharing SetupRelease { MeasGapSharingScheme } OPTIONAL, -- Need M', and 'MeasGapSharingScheme::= ENUMERATED {scheme00, scheme01, scheme10, scheme11}' indicates a modification way; 'measGapSharingConfig SetupRelease { MeasGapSharingConfig}' indicates another modification way.

In some embodiments, IDs of different measurement gap sharing configurations indicate different measurement gap sharing configurations.

In some embodiments, a measurement gap associated with the measurement gap sharing configuration is indicated in the measurement gap sharing configuration.

For example, the measurement gap sharing configuration includes an ID of the associated measurement gap.

For example, the measurement gap sharing configuration includes an ID list of the associated measurement gaps, the ID list of the associated measurement gaps includes a set of measurement gaps associated with the measurement gap sharing configuration.

The following is an example:

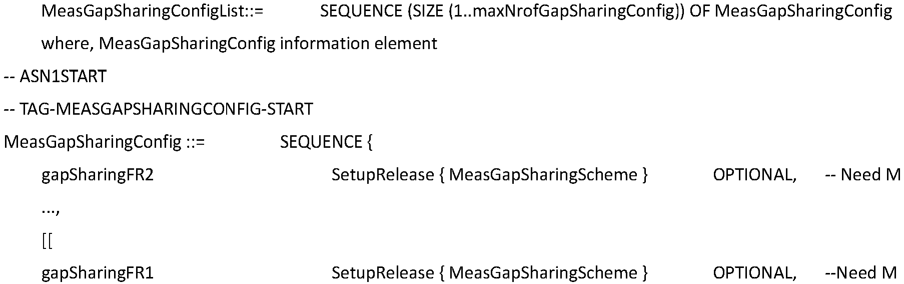

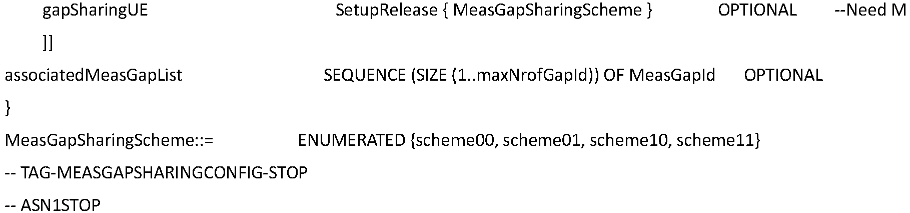

In some embodiments, IDs of different measurement gaps indicate different measurement gap sharing configurations.

In some embodiments, a correspondence relationship between the measurement gap and the measurement gap sharing configuration is indicated in one list.

For example, each element in the list may associate a measurement gap configuration with a corresponding measurement gap sharing configuration.

For example, each element in the list may associate a measurement gap sharing configuration with a corresponding measurement gap. The following is an example.

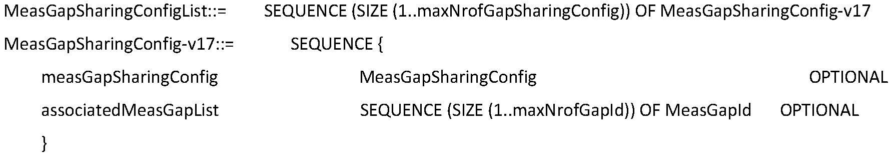

The list MeasGapSharingConfigList indicates a correspondence relationship between the measurement gap and the measurement gap sharing configuration.

The parameter MeasGapSharingConfig-v17 indicates the elements included in the list MeasGapSharingConfigList representing a list of gap sharing configuration and the associated measurement gaps.
measGapSharingConfig indicates a measurement gap sharing configuration.
associatedMeasGapList indicates a list of measurement gap IDs associated with the measurement gap sharing configuration.
maxNrofGapId is a maximum number of measurement gaps which can be associated.

MeasGapId is an ID of a measurement gap. In some embodiments, the correspondence relationship between the measurement gap and the measurement gap sharing configuration is obtained by receiving a configuration message from the network device.

For example, the configuration message IE may be included in the measurement configuration information measConfig.

For example, the configuration message may be a RRC message, and the correspondence relationship between the measurement gap and the measurement gap sharing configuration is obtained by receiving the RRC message from the network device.

In some embodiments, the measurement configuration information includes a measurement gap sharing configuration list, which includes a set of measurement gap sharing configurations, and the set of measurement gap sharing configurations include a plurality of measurement gap sharing configurations, to configure the plurality of measurement gap sharing configurations.

In some embodiments, the measurement gap includes a plurality of frequency layers or a plurality of frequency points, and the measurement gap sharing configuration indicate a measurement opportunity percentage of each frequency layer or each frequency point for each measurement gap.

In an embodiment of the present disclosure, the frequency layer is limited as follows:
1, A positioning reference signal (PRS) measurement may be associated with one gap pattern, regardless of the number of frequencies measured via the positioning reference signal.
2. Each measured SSB or LTE frequency is considered as one frequency layer.
3, Measurement of CSI-RS resources with the same center frequency are considered as one frequency layer. Multiple MOs may exist, including CSI-RS resources with the same center frequency.
4, SSB and CSI-RS measurement in one MO are considered as different frequency layers.

For example, one MO may be one frequency layer.

For example, the measurement gap sharing configuration directly indicates a measurement opportunity percentage of each frequency layer of each measurement gap, or indicates a measurement opportunity percentage of each frequency point of each measurement gap.

For the measurement gap sharing configuration that directly indicates the measurement opportunity percentage of each frequency layer of each measurement gap, the following is an example:

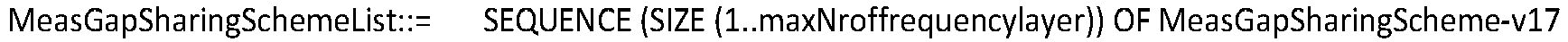

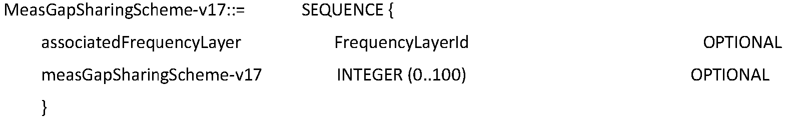

The list MeasGapSharingSchemeList indicates a measurement gap sharing configuration list, indicating all or a portion of the frequency layers in the measurement gap to which it is associated and the measurement opportunity percentage of the frequency layer.

The parameter MeasGap Sharing Scheme-v 17 indicates the elements included in the list MeasGapSharingSchemeList indicating a frequency layer to which the measurement gap is associated and the measurement opportunity percentage of the frequency layer.

associatedFrequencyLayer indicates a frequency layer associated with the measurement gap.

measGapSharingScheme-v17 indicates the measurement opportunity percentage of the frequency layer in a unit being %.

maxNroffrequencylayer is a maximum number of frequency layers which can be associated.

FrequencyLayerId is an ID of the frequency layer.

For example, the measurement gap sharing configuration directly indicating the measurement opportunity percentage of each frequency layer of each measurement gap is configured for each measurement gap, or, the measurement gap sharing configuration directly indicating the measurement opportunity percentage of each frequency layer of each measurement gap is configured for each measurement gap group.

For example, the measurement gap sharing configuration directly indicating the measurement opportunity percentage of each frequency point of each measurement gap is configured for each measurement gap, or, the measurement gap sharing configuration directly indicating the measurement opportunity percentage of each frequency point of each measurement gap is configured for each measurement gap group.

For example, for a plurality of frequency layers associated with the measurement gap corresponding to a frequency layer list, the measurement gap sharing configuration indicates a measurement opportunity percentage of each frequency layer in the frequency layer list; or, for a plurality of frequency points associated with the measurement gap corresponding to a frequency point list, the measurement gap sharing configuration indicates the measurement opportunity percentage of each frequency point in the frequency point list.

For the plurality of frequency layers associated with the measurement gap corresponding to the frequency layer list, the measurement gap sharing configuration indicates the measurement opportunity percentage of each frequency layer in the frequency layer list, and the following is an example:
MeasGapSharingSchemeList::= SEQUENCE (SIZE (1..maxNroffrequencylayer)) OF INTEGER (0..100).

The list MeasGapSharingSchemeList indicates a measurement gap sharing configuration list indicating a measurement opportunity percentage of all frequency layers in the measurement gap to which it is associated, with a unit being %.

The size of this list configured by the network is a total number of frequency layers associated with the measurement gap, and each element of this list sequentially corresponds to a measurement opportunity percentage of each frequency layer in the frequency layer list associated with the measurement gap.

maxNroffrequencylayer is a maximum number of frequency layers which can be associated.

In some embodiments, the terminal device receives measurement configuration information from the network device, including a plurality of configuration parameters for the measurement gap, in which the configuration parameters for the measurement gap include a measurement gap configuration list, or a measurement gap configuration.

In an embodiment of the present disclosure, the measurement gap configuration includes a measurement gap configuration list per UE or a measurement gap configuration list applicable to FR1 or a measurement gap configuration list applicable to FR2.

In an embodiment of the present disclosure, the measurement gap configuration list includes an addition/modification list of measurement gap configurations and/or a release/removal measurement gap configuration list.

In some embodiments, the configuration parameters of the measurement gap further include a measurement gap configuration list, in which the measurement gap configuration list is stored in terminal device variables.

In an embodiment of the present disclosure, a new parameter measurement gap configuration list is introduced, which has a type of a measurement gap addition/modification list, which may be included in a measurement-related UE variable, VarMeasConfig, stored by the terminal device. The measurement gap addition/modification list includes a measurement gap ID and a corresponding measurement gap configuration.

The following is an example:

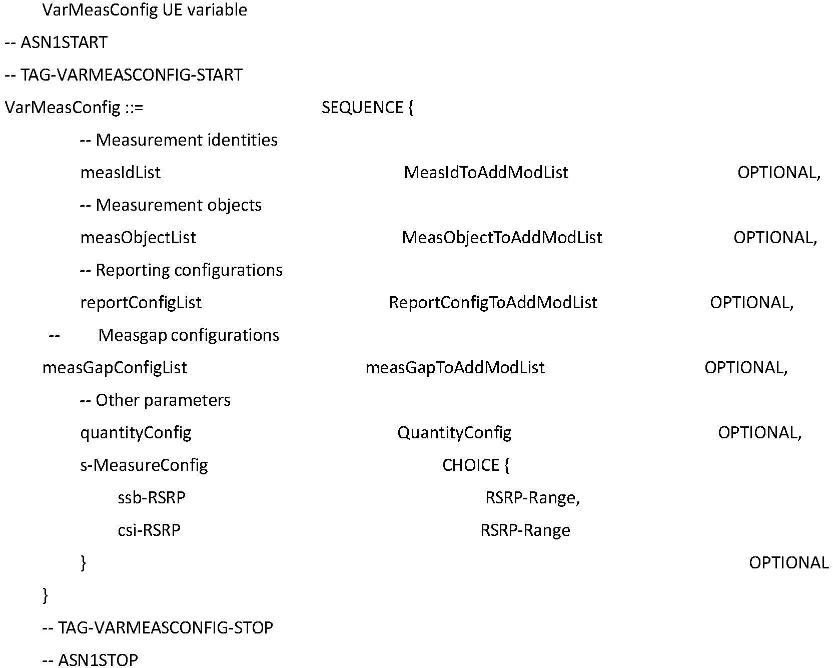

In some embodiments, the measurement gap is configured by the measurement gap configuration in the R16 (Release 16) version.

At S22, a usage mode of the measurement gap sharing configuration is determined.

In an embodiment of the present disclosure, the terminal device receives measurement configuration information from the network device, in which the measurement configuration information includes the plurality of configuration parameters for the measurement gap and the measurement gap sharing configuration, and the terminal device determines an available measurement gap based on the measurement configuration information, and then determines the usage mode of the measurement gap sharing configuration based on the configuration parameters of the measurement gaps and/or the measurement gap sharing configuration, which achieves the enhancements to the measurement gap.

Referring to FIG. 3, it is a flowchart illustrating another method for configuring a measurement gap according to embodiments of the present disclosure.

As shown in FIG. 3, the method is executed by a terminal device, and the method may include, but is not limited to the following steps S31-532.

At S31, measurement configuration information is received from a network device, in which the measurement configuration information includes a plurality of configuration parameters for the measurement gap and a measurement gap sharing configuration.

The detailed description of step S31 in the embodiment of the present disclosure can be found in the relevant description of step S21 in the above example, which will not be repeated herein.

At S32, an association relationship corresponding to the measurement gap is determined; and an availability of the measurement gap sharing configuration is determined based on the association relationship corresponding to the measurement gap.

In an embodiment of the present disclosure, whether or not the terminal device applies the measurement gap sharing configuration is related to the association relationship corresponding to the measurement gap.

In some embodiments, the measurement configuration information includes a measurement gap sharing configuration applicable to all the measurement gaps.

In an embodiment of the present disclosure, the availability of the measurement gap sharing configuration is determined based on the association relationship corresponding to the measurement gap.

In some embodiments, in response to the measurement gap being not associated with both an intra-frequency measurement and an inter-frequency measurement, or in response to the measurement gap being not associated with both the intra-frequency measurement and an inter-RAT measurement, it is determined that the measurement gap sharing configuration is unavailable.

In some embodiments, in response to the measurement gap being associated with both the intra-frequency measurement and the inter-frequency measurement, or in response to the measurement gap being associated with both the intra-frequency measurement and the inter-RAT measurement, it is determined that the measurement gap sharing configuration is available.

In an embodiment of the present disclosure, when the measurement gap is not associated with both the intra-frequency measurement and the inter- frequency measurement, or both the intra-frequency measurement and the inter-RAT measurement, it is determined that the measurement gap sharing configuration is unavailable. In this case, the terminal device ignores the corresponding measurement gap sharing configuration, or does not apply the measurement gap sharing configuration corresponding to the measurement gap.

In some embodiments, the terminal device does not apply the measurement gap sharing configuration corresponding to the measurement gap, and the terminal device may determine a corresponding measurement gap sharing scheme based on UE implementations.

In an embodiment of the present disclosure, when the measurement gap is associated with both the intra-frequency measurement and the inter-frequency measurement, or both the intra-frequency measurement and the inter-RAT measurement, it is determined that the measurement gap sharing information is available. In this case, the terminal device determines that the measurement gap sharing configuration corresponding to the measurement gap is applied when the corresponding measurement is performed.

In a possible implementation, the intra-frequency measurement associated with the measurement gap may indicate that frequency points corresponding to frequency layers associated with the measurement gap include an intra-frequency. The inter-frequency measurement associated with the measurement gap may indicate that the frequency points corresponding to the frequency layers associated with the measurement gap include an inter-frequency rate. The inter-RAT measurement associated with the measurement gap may indicate that frequency points corresponding to the frequency layers associated with the measurement gap include an inter-RAT frequency.

The intra-frequency measurement associated with the measurement gap may indicate that a frequency point of a MO corresponding to a frequency layer associated with the measurement gap includes the intra-frequency. The inter-frequency measurement associated with the measurement gap may indicate that the frequency point of the MO corresponding to the frequency layer associated with the measurement gap includes the inter-frequency. The inter-RAT measurement associated with the measurement gap may be the frequency point of the MO corresponding to the frequency layer associated with the measurement gap includes the inter-RAT frequency.

In another possible implementation, the intra-frequency measurement associated with the measurement gap may indicate that the frequency point corresponding to the MO associated with the measurement gap includes the intra-frequency. The measurement inter-frequency measurement associated with the measurement gap may indicate that the frequency point corresponding to the MO associated with the measurement gap includes the inter-frequency. The inter-RAT measurement associated with the measurement gap may indicate that the frequency point corresponding to the MO associated with the measurement gap includes the inter-RAT frequency.

In some embodiments, the association relationship is a frequency layer associated with the measurement gap. When the frequency layer associated with the measurement gap includes both an intra-frequency layer and an inter-frequency layer, or when the frequency layer associated with the measurement gap includes both the intra-frequency layer and an inter-RAT frequency layer, the association relationship is that, the measurement gap is associated with both the intra-frequency measurement and the inter-frequency measurement, or the measurement gap is associated with both the intra-frequency measurement and the inter-RAT measurement; when the frequency layer associated with the measurement gap include only the intra-frequency layer, or only the inter-frequency layer or the inter-RAT frequency layer, the association relationship is that, the measurement gap is not associated with both the intra-frequency measurement and the inter-frequency measurement, or the measurement gap is not associated with both the inter-frequency measurement and the inter-RAT measurement.

The intra-frequency layer is a frequency layer associated with the same/intra frequency; the inter-frequency layer is a frequency layer associated with different/inter frequencies; and the inter-RAT frequency layer is a frequency layer associated with different/inter RAT.

In a possible implementation, a frequency layer may be simultaneously associated with two or three of the intra-frequency, the inter-frequency and inter-RAT. That is, a frequency layer may be both the intra-frequency layer and the inter-frequency layer, or both the intra-frequency layer and the inter-RAT frequency layer, or both the inter-frequency layer and the inter-RAT frequency layer, or the intra-frequency layer, the inter-frequency layer and the inter-RAT frequency layer.

In an embodiment of the present disclosure, the measurement gap may be associated with one frequency layer or a plurality of frequency layers.

In the case when the measurement gap is associated with one frequency layer, if the frequency layer is both the intra-frequency layer and the inter-frequency layer, or both the intra-frequency layer and the inter-RAT frequency layer, the association relationship is that, the measurement gap is associated with both the intra-frequency measurement and the inter-frequency measurement, or both the intra-frequency measurement and the inter-RAT measurement; if the frequency layer is only the intra-frequency layer, or only the inter-frequency layer or inter-RAT frequency layer, the association relationship is that, the measurement gap is not associated with both the intra-frequency measurement and the inter-frequency measurement, or is not associated with both the intra-frequency measurement and the inter-RAT measurement.

In the case when the measurement gap is associated with the plurality of frequency layers, if at least one of the plurality of frequency layers is the intra-frequency layer, or at least one of the plurality of frequency layers is the inter-frequency layer, or at least one of the plurality of frequency layers is the inter-RAT frequency layer, the association relationship is that, the measurement gap is associated with both the intra-frequency measurement and the inter-frequency measurement, or the measurement gap is associated with both the intra-frequency measurement and the inter-RAT measurement.

In some embodiments, if there is a first measurement gap that is associated with frequency layers and/or frequency points, and a second measurement gap that is not associated with frequency layers and/or frequency points, the first measurement gap is used to make measurements on the associated frequency layers and/or frequency points, and the second measurement gap is used to make measurements on the unassociated frequency layers and/or frequency points.

In an embodiment of the present disclosure, if there are the first measurement gap associated with frequency layers and/or frequency points, and the second measurement gap not associated with frequency layers and/or frequency points (which is configured by a measurement gap configuration in Release 16), the corresponding first measurement gap can be used for measuring the associated frequency layers or points. For the unassociated frequency layers or points, the second measurement gaps not associated with frequency layers and/or frequency points can be used for measurement.

In some embodiments, a process related to determining the availability of a measurement gap sharing configuration based on the association relationship corresponding to the measurement gap may be included in a process related to the measurement gap sharing configuration, or in a process related to the measurement gap configuration, or independently as a separate process.

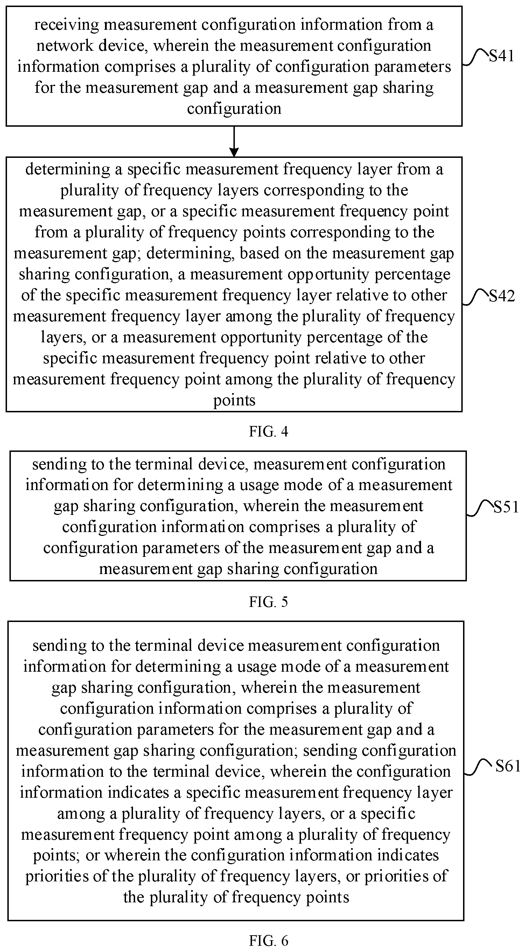

Referring to FIG. 4, it is a flowchart illustrating yet another method for configuring a measurement gap according to embodiments of the present disclosure.

As shown in FIG. 4, the method is executed by a terminal device, and the method may include, but is not limited to the following steps S41-S42.

At S41, measurement configuration information is received from a network device, in which the measurement configuration information includes a plurality of configuration parameters for the measurement gap and a measurement gap sharing configuration.

The detailed description of step S41 in the embodiment of the present disclosure can be found in the relevant description of step S21 in the above example, which will not be repeated herein.

At S42, a specific measurement frequency layer is determined from a plurality of frequency layers corresponding to the measurement gap, or a specific measurement frequency point is determined from a plurality of frequency points corresponding to the measurement gap; a measurement opportunity percentage of the specific measurement frequency layer relative to other measurement frequency layer among the plurality of frequency layers is determined based on the measurement gap sharing configuration, or a measurement opportunity percentage of the specific measurement frequency point relative to other measurement frequency point among the plurality of frequency points is determined based on the measurement gap sharing configuration.

In some embodiments, the measurement gap sharing configuration is configured with measurement opportunity percentages for different frequency layers, and after determining a specific measurement frequency layer among the plurality of frequency layers corresponding to the measurement gap, the terminal device is able to determine the measurement opportunity percentage occupied by the specific measurement frequency layer with respect to the other measurement frequency layers of the plurality of frequency layers, based on the measurement gap sharing configuration.

Alternatively, the measurement gap sharing configuration is configured with measurement opportunity percentages for different frequency points, and after determining a specific measurement frequency point among the plurality of frequency points corresponding to the measurement gap, the terminal device is able to determine the measurement opportunity percentage occupied by the specific measurement frequency point relative to the other measurement frequency points of the plurality of frequency points, based on the measurement gap sharing configuration.

In some embodiments, a frequency layer having an intra-frequency point among the plurality of frequency layers is determined as the specific measurement frequency layer, or an intra-frequency point among the plurality of frequency points is determined as the specific measurement frequency point.

In an embodiment of the present disclosure, when frequency point corresponding to the frequency layer associated with the measurement gap includes the intra-frequency frequency point, the measurement gap is associated with the intra-frequency measurement, the intra-frequency frequency point is determined as the specific measurement frequency point, or the frequency layer associated with the intra-frequency measurement associated with the measurement gap is determined as the specific measurement frequency layer.

In some embodiments, the specific measurement frequency layer among the plurality of frequency layers, or the specific measurement frequency point among the plurality of frequency points, is determined according to the UE implementations.

In some embodiments, determining the specific measurement frequency layer from the plurality of frequency layers corresponding to the measurement gap, or the specific measurement frequency point from the plurality of frequency points corresponding to the measurement gap, includes: receiving configuration information from the network device, in which the configuration information indicates the specific measurement frequency layer among the plurality of frequency layers, or the specific measurement frequency point among the plurality of frequency points; or the configuration information indicates priorities of the plurality of frequency layers, or priorities of the plurality of frequency points.

In some embodiments, the specific measurement frequency layer among the plurality of frequency layers, or the specific measurement frequency point among the plurality of frequency points, to which the measurement gap corresponds, may be indicated by a RRC message.

For example, the specific measurement frequency layer among the plurality of frequency layers, or the specific measurement frequency point among the plurality of frequency points, to which the measurement gap corresponds, is included in a MeasGapConfig, a MeasGapConfigList, or a gap configuration (GapConfig) associated with the measurement Gap configuration.

For example, the specific measurement frequency layer among the plurality of frequency layers, or the specific measurement frequency point among the plurality of frequency points, to which the measurement gap corresponds, is included in the IE indicative of the association relationship between the measurement gap and the frequency layer.

In some embodiments, the specific measurement frequency layer among the plurality of frequency layers, or the specific measurement frequency point among the plurality of frequency points, is individually configured or indicated by the network device for a different measurement gap.

In some implementations, determining the specific measurement frequency layer from the plurality of frequency layers corresponding to the measurement gap, or the specific measurement frequency point from the plurality of frequency points corresponding to the measurement gap, includes: determining priorities of the plurality of frequency layers, or priorities of the plurality of frequency points; determining the specific measurement frequency layer based on the priorities of the plurality of frequency layers, or determining the specific measurement frequency point based on the priorities of the plurality of frequency points.

In some possible implementations, a corresponding priority is included in the MO configuration, and the priorities of the plurality of frequency layers corresponding to the measurement gap, or the priorities of the plurality of frequency points, are determined by the priority of the MO. After determining the priorities of the plurality of frequency layers corresponding to the measurement gap, or the priorities of the plurality of frequency points, a specific measurement frequency layer or a specific measurement frequency point is determined based on prioritization information.

Referring to FIG. 5, it is a flowchart illustrating yet another method for configuring a measurement gap according to embodiments of the present disclosure.

As shown in FIG. 5, the method is executed by the network device, and the method may include, but is not limited to the following step S51.-

At S51, measurement configuration information for determining a usage mode of a measurement gap sharing configuration is sent to the terminal device. The measurement configuration information includes a plurality of configuration parameters for the measurement gap and a measurement gap sharing configuration.

In an embodiment of the present disclosure, the measurement configuration information received by the terminal device from the network device may be measConfig, and the terminal device receives the measConfig sent by the network device in a RRC reconfiguration message.

The measConfig includes the measurement gap sharing configuration, and the measurement gap sharing configuration may be measGapSharingConfig. The measConfig also includes a plurality of configuration parameters for the measurement gap.

In some embodiments, the measurement configuration information includes measurement gap sharing configuration applicable to all the measurement gaps.

In some embodiments, each measurement gap or each measurement gap group has an independent measurement gap sharing configuration.

In an embodiment of the present disclosure, there may be a correspondence relationship between the measurement gap and the measurement gap sharing configurations. Each measurement gap corresponds to an independent measurement gap sharing configuration, or a plurality of measurement gaps form a measurement gap group, and the measurement gap group corresponds to an independent measurement gap sharing configuration.

In some embodiments, a related IE corresponding to the measurement gap indicates a measurement gap sharing configuration corresponding to the measurement gap.

In an example, the measurement gap sharing configuration corresponding to the measurement gap may be included in IEs (such as MeasGapConfig, MeasGapConfigList, GapConfig) corresponding to the measurement gap.

In an example, an ID of the measurement gap sharing configuration corresponding to the measurement gap may be included in IEs (such as MeasGapConfig, MeasGapConfigList, GapConfig) corresponding to the measurement gap.

The following is an example: 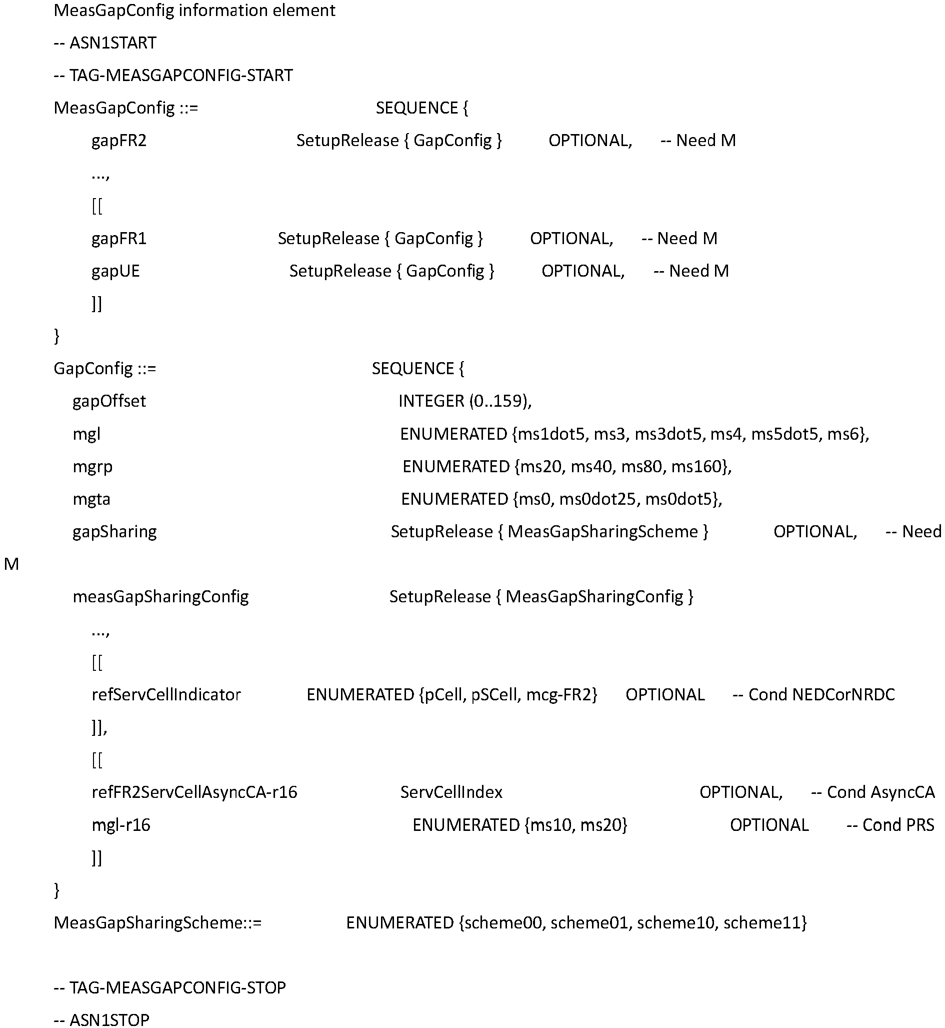 where 'gapsharing SetupRelease { MeasGapSharingScheme } OPTIONAL, -- Need M', and 'MeasGapSharingScheme::= ENUMERATED {scheme00, scheme01, scheme10, scheme11}' indicates a modification way; 'measGapSharingConfig SetupRelease { MeasGapSharingConfig}' indicates another modification way.

In some embodiments, IDs of different measurement gap sharing configurations indicate different measurement gap sharing configurations.

In some embodiments, a measurement gap associated with the measurement gap sharing configuration is indicated in the measurement gap sharing configuration.

For example, the measurement gap sharing configuration includes an ID of the associated measurement gap.

For example, the measurement gap sharing configuration includes an ID list of the associated measurement gaps, the ID list of the measurement gap includes a set of measurement gaps associated with this measurement gap sharing configuration.

The following is an example:

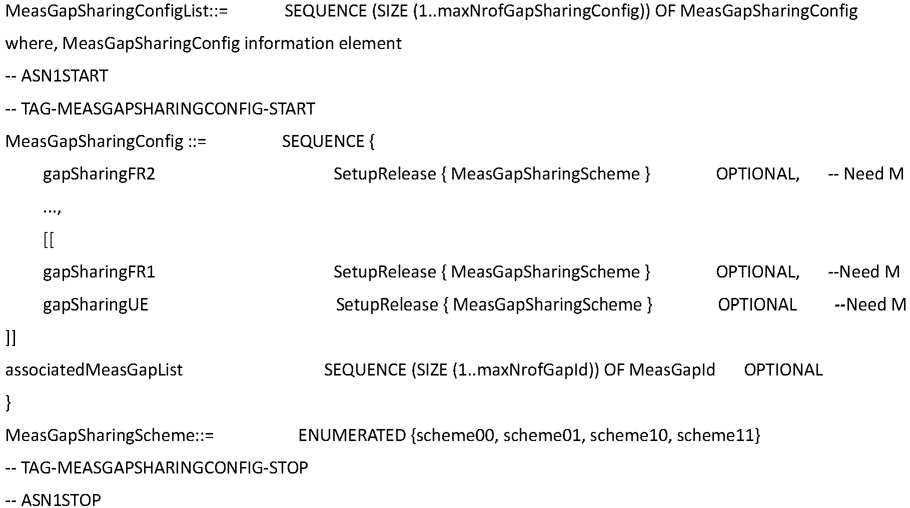

In some embodiments, IDs of different measurement gaps indicate different measurement gap configurations.

In some embodiments, a correspondence relationship between the measurement gap and the measurement gap sharing configuration may be represented by one list.

For example, each element in the list may associate a measurement gap configuration with a corresponding measurement gap sharing configuration.

For example, each element in the list may associate a measurement gap sharing configuration with a corresponding measurement gap. The following is an example:

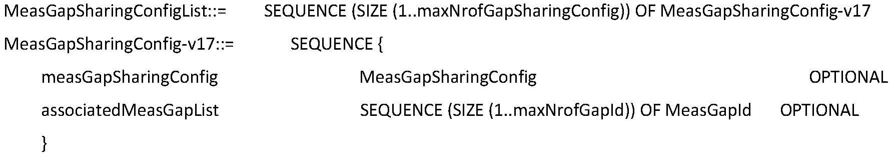

The list MeasGapSharingConfigList indicates a correspondence relationship between the measurement gap and the measurement gap sharing configuration.

The parameter MeasGapSharingConfig-v17 indicates the elements included in the list MeasGapSharingConfigList representing a list of gap sharing configuration and the associated measurement gaps.

measGapSharingConfig indicates a measurement gap sharing configuration.

associatedMeasGapList indicates a list of measurement gap IDs associated with the measurement gap sharing configuration.

maxNrofGapId is a maximum number of measurement gaps which can be associated.

MeasGapId is an ID of the measurement gap.

In some embodiments, the correspondence relationship between the measurement gap and the measurement gap sharing configuration is obtained by receiving a configuration message from the network device.

For example, the configuration message IE may be included in the measurement configuration information measConfig.

For example, the configuration message may be a RRC message, and the correspondence relationship between the measurement gap and the measurement gap sharing configuration is obtained by receiving the RRC message from the network device.

In some embodiments, the measurement configuration information includes a measurement gap sharing configuration list, which includes a set of measurement gap sharing configurations, and the set of measurement gap sharing configurations include a plurality of measurement gap sharing configurations, to configure the plurality of measurement gap sharing configurations.

In some embodiments, the measurement gap includes a plurality of frequency layers or a plurality of frequency points, and the measurement gap sharing configuration indicate a measurement opportunity percentage of each frequency layer or each frequency point for each measurement gap.

In embodiments of the present disclosure, the frequency layer is limited as follows:
1, A positioning reference signal (PRS) measurement may be associated with one gap pattern, regardless of the number of frequencies measured via the positioning reference signal.
2. Each measured SSB or LTE frequency is considered as one frequency layer.
3, Measurement of CSI-RS resources with the same center frequency are considered as one frequency layer. Multiple MOs may exist, including CSI-RS resources with the same center frequency.
4, SSB and CSI-RS measurement in one MO are considered as different frequency layers.

For example, one MO may be one frequency layer.

For example, the measurement gap sharing configuration directly indicates a measurement opportunity percentage of each frequency layer of each measurement gap, or indicates a measurement opportunity percentage of each frequency point of each measurement gap.

For the measurement gap sharing configuration that directly indicates the measurement opportunity percentage of each frequency layer of each measurement gap, the following is an example:

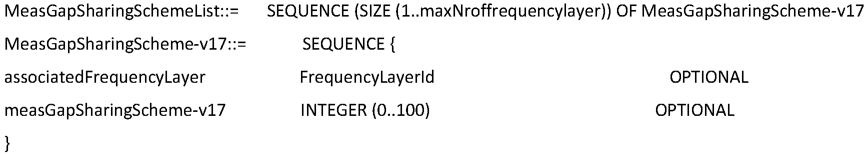

The list MeasGapSharingSchemeList indicates a measurement gap sharing configuration list, indicating all or a portion of the frequency layers in the measurement gap to which it is associated and the measurement opportunity percentage of the frequency layer.

The parameter MeasGap Sharing Scheme-v 17 indicates the elements included in the list MeasGapSharingSchemeList indicating a frequency layer to which the measurement gap is associated and the measurement opportunity percentage of the frequency layer.

associatedFrequencyLayer indicates a frequency layer associated with the measurement gap.

measGapSharingScheme-v17 indicates the measurement opportunity percentage of the frequency layer in a unit being %.

maxNroffrequencylayer is a maximum number of frequency layers which can be associated.

FrequencyLayerId is an ID of the frequency layer.

For example, the measurement gap sharing configuration directly indicating the measurement opportunity percentage of each frequency layer of each measurement gap is configured for each measurement gap, or, the measurement gap sharing configuration directly indicating the measurement opportunity percentage of each frequency layer of each measurement gap is configured for each measurement gap group.

For example, the measurement gap sharing configuration directly indicating the measurement opportunity percentage of each frequency point of each measurement gap is configured for each measurement gap, or, the measurement gap sharing configuration directly indicating the measurement opportunity percentage of each frequency point of each measurement gap is configured for each measurement gap group.

For example, for a plurality of frequency layers associated with the measurement gap corresponding to a frequency layer list, the measurement gap sharing configuration indicates a measurement opportunity percentage of each frequency layer in the frequency layer list; or, for a plurality of frequency points associated with the measurement gap corresponding to a frequency point list, the measurement gap sharing configuration indicates the measurement opportunity percentage of each frequency point in the frequency point list.

For the plurality of frequency layers associated with the measurement gap corresponding to the frequency layer list, the measurement gap sharing configuration indicates the measurement opportunity percentage of each frequency layer in the frequency layer list, and the following is an example:
MeasGapSharingSchemeList::= SEQUENCE (SIZE (1..maxNroffrequencylayer)) OF INTEGER (0..100).

The list MeasGapSharingSchemeList indicates a measurement gap sharing configuration list indicating a measurement opportunity percentage of all frequency layers in the measurement gap to which it is associated, with a unit being %.

The size of this list configured by the network is a total number of frequency layers associated with the measurement gap, and each element of this list sequentially corresponds to a measurement opportunity percentage of each frequency layer in the frequency layer list associated with the measurement gap.

maxNroffrequencylayer is a maximum number of frequency layers which can be associated.

In some embodiments, the terminal device receives measurement configuration information from the network device, including a plurality of configuration parameters for the measurement gap, in which the configuration parameters for the measurement gap include a measurement gap configuration list, or a measurement gap configuration.

In an embodiment of the present disclosure, the measurement gap configuration includes a measurement gap configuration list per UE or a measurement gap configuration list applicable to FR1 or a measurement gap configuration list applicable to FR2.

In an embodiment of the present disclosure, the measurement gap configuration list includes an addition/modification list of measurement gap configurations and/or a release/removal measurement gap configuration list.

In some embodiments, the configuration parameters of the measurement gap further include a measurement gap configuration list, in which the measurement gap configuration list is stored in terminal device variables.

In some embodiments, the measurement gap is configured by the measurement gap configuration in the R16 (Release 16) version.

In an embodiment of the present disclosure, the terminal device receives measurement configuration information from the network device, in which the measurement configuration information includes the plurality of configuration parameters for the measurement gap and the measurement gap sharing configuration, and the terminal device determines the available measurement gap based on the measurement configuration information, determines the usage mode of the measurement gap sharing configuration based on the configuration parameters of the measurement gaps and/or the measurement gap sharing configuration, which achieves the enhancement to the measurement gap.

Referring to FIG. 6, it is a flowchart illustrating yet another method for configuring a measurement gap according to embodiments of the present disclosure.

As shown in FIG. 6, the method is performed by a network device, and the method may include, but is not limited to the following step S61.

At S61, measurement configuration information for determining a usage mode of a measurement gap sharing configuration is sent to the terminal device, in which the measurement configuration information includes a plurality of configuration parameters for the measurement gap and a measurement gap sharing configuration; configuration information is sent to the terminal device, in which the configuration information indicates a specific measurement frequency layer among a plurality of frequency layers, or a specific measurement frequency point among a plurality of frequency points; or the configuration information indicates priorities of the plurality of frequency layers, or priorities of the plurality of frequency points.

In some embodiments, each measurement gap or each measurement gap group has an independent measurement gap sharing configuration.

In some embodiments, each measurement gap includes a plurality of frequency layers or a plurality of frequency points, and the measurement gap sharing configuration indicates a measurement opportunity percentage of each frequency layer of each measurement gap, or indicates a measurement opportunity percentage of each frequency point of each measurement gap.

In some embodiments, the configuration parameters of the measurement gap further include a measurement gap configuration list.

In some embodiments, the measurement gap configuration list is stored in terminal device variables.

The related descriptions of step S61 in embodiments of the present disclosure can be found in the above examples of embodiments of the present disclosure and will not be repeated herein.

In the above examples of embodiments provided in the present disclosure, the methods in the embodiments of the present disclosure are described from the perspectives of the network device, and the terminal device, respectively. In order to realize each of the functions in the method provided in the above examples of embodiments of the present disclosure, the network device and the terminal device may include a hardware structure, a software module, so that the above functions are implemented in the form of the hardware structure, the software module, or the hardware structure plus the software module. A function of each of the above examples of embodiments functions may be performed in the form of the hardware structure, the software module, or the hardware structure plus the software module.

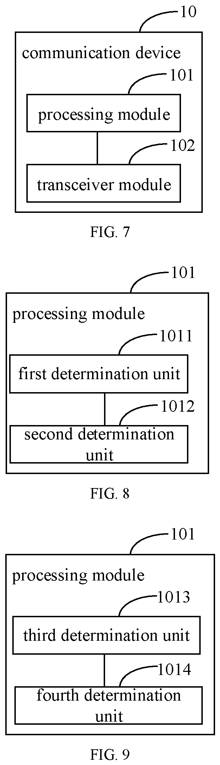

Referring to FIG. 7, it is a structure diagram illustrating a communication apparatus 10 according to embodiments of the present disclosure. The communication apparatus 10 shown in FIG. 7 may include a transceiver module 102. The transceiver module 102 may include a transmitter module and/or a receiving module, the transmitter module for realizing a transmitting function, and the receiving module for realizing a receiving function, and the transceiver module 102 may realize the transmitting function and/or the receiving function.

The communication apparatus 10 may be a terminal device, an apparatus in the terminal device, or an apparatus capable of being matched for use with the terminal device.

The communication apparatus 10 is the terminal device, including: a transceiver module 102 and a processing module 101.

The transceiver module 102 is configured to receive measurement configuration information from a network device, in which the measurement configuration information includes a plurality of configuration parameters for the measurement gap and the measurement gap sharing configuration.

The processing module 101 is configured to determine a usage mode of the measurement gap sharing configuration.

Referring to FIG. 8, in some embodiments, the processing module 101 includes: a first determination unit 1011 and a second determination unit 1012.

The first determination unit 1011 is configured to determine an association relationship corresponding to the measurement gap.

The second determination unit 1012 is configured to determine based on the association relationship corresponding to the measurement gap, an availability of the measurement gap sharing configuration.

In some embodiments, the second determining unit 1012 is specifically configured to: in response to the measurement gap being not associated with both an intra-frequency measurement and an inter-frequency measurement, or in response to the measurement gap being not associated with both the intra-frequency measurement and an inter-RAT measurement, determine the measurement gap sharing configuration is unavailable; and in response to the measurement gap being associated with both the intra-frequency measurement and the inter-frequency measurement, or in response to the measurement gap being associated with both the intra-frequency measurement and the inter-RAT measurement, determine that the measurement gap sharing configuration is available.

In some embodiments, the association relationship is a frequency layer associated with the measurement gap, in response to the frequency layer associated with the measurement gap including both an intra-frequency layer and an inter-frequency layer, or in response to the frequency layer associated with the measurement gap including both the intra-frequency layer and an inter-RAT frequency layer, the association relationship is that, the measurement gap is associated with both the intra-frequency measurement and the inter-frequency measurement, or the measurement gap is associated with both the intra-frequency measurement and the inter-RAT measurement; in response to the frequency layer associated with the measurement gap including only the intra-frequency layer, or only the inter-frequency layer or the inter-RAT frequency layer, the association relationship is that, the measurement gap is not associated with both the intra-frequency measurement and the inter-frequency measurement, or the measurement gap is not associated with both the inter-frequency measurement and the inter-RAT measurement.

Referring to FIG. 9, in some embodiments, the processing module 101 includes: a third determination unit 1013 and a fourth determination unit 1014.

The third determination unit 1013 is configured to determine a specific measurement frequency layer from a plurality of frequency layers corresponding to the measurement gap, or a specific measurement frequency point from a plurality of frequency points corresponding to the measurement gap.

The fourth determination unit 1014 is configured to determine based on the measurement gap sharing configuration, a measurement opportunity percentage of the specific measurement frequency layer relative to other measurement frequency layer among the plurality of frequency layers, or a measurement opportunity percentage of the specific measurement frequency point relative to other measurement frequency point among the plurality of frequency points.

In some embodiments, the third determining unit 1013 is specifically configured to determine a frequency layer having an intra-frequency point among the plurality of frequency layers as the specific measurement frequency layer, or determining an intra-frequency point among the plurality of frequency points as the specific measurement frequency point.

In some embodiments, the third determination unit 1013 is specifically configured to receive configuration information from the network device, in which the configuration information indicates the specific measurement frequency layer among the plurality of frequency layers, or the specific measurement frequency point among the plurality of frequency points; or in which the configuration information indicates priorities of the plurality of frequency layers, or priorities of the plurality of frequency points.

In some embodiments, the third determining unit 1013 is specifically configured to determine priorities of the plurality of frequency layers, or priorities of the plurality of frequency points; determine the specific measurement frequency layer based on the priorities of the plurality of frequency layers, or determine the specific measurement frequency point based on the priorities of the plurality of frequency points.

In some embodiments, each measurement gap or each measurement gap group has an independent measurement gap sharing configuration.

In some embodiments, 10.each measurement gap includes a plurality of frequency layers or a plurality of points, the measurement gap sharing configuration indicates a measurement opportunity percentage of each frequency layer of each measurement gap, or a measurement opportunity percentage of each frequency point of each measurement gap.

In some embodiments, the plurality of configuration parameters of the measurement gap further include a measurement gap configuration list.

In some embodiments, the measurement gap configuration list is stored in terminal device variables.

Referring to FIG. 7, it is a structure diagram illustrating a communication apparatus 10 according to embodiments of the present disclosure. The communication apparatus 10 shown in FIG. 7 may include a transceiver module 102. The transceiver module 102 may include a transmitter module and/or a receiving module, the transmitter module for realizing a transmitting function, and the receiving module for realizing a receiving function, and the processing module 101 may realize the transmitting function and/or the receiving function.

The communication apparatus 10 may be the network device, or an apparatus in the network device, or an apparatus capable of being matched for use with the network device.

The communication apparatus 10 is the network device, including: a transceiver module 102 and a processing module 101.

The transceiver module 102 is configured to send to the terminal device measurement configuration information for determining a usage mode of a measurement gap sharing configuration, in which the measurement configuration information includes a plurality of configuration parameters for the measurement gap and a measurement gap sharing configuration.

In some embodiments, the transceiver module 102 is further configured to send configuration information to the terminal device, in which the configuration information indicates a specific measurement frequency layer among a plurality of frequency layers, or a specific measurement frequency point among a plurality of frequency points; or the configuration information indicates priorities of the plurality of frequency layers, or priorities of the plurality of frequency points

In some embodiments, each measurement gap or each measurement gap group has an independent measurement gap sharing configuration.

In some embodiments, ach the measurement gap includes a plurality of frequency layers or frequency points, the measurement gap sharing configuration indicates a measurement opportunity percentage of each frequency layer of each measurement gap, or indicates a measurement opportunity percentage of each frequency point of each measurement gap.

In some embodiments, the configuration parameters for the measurement gap further include a measurement gap configuration list.

In some embodiments, the measurement gap configuration list is stored in terminal device variables.

For the communication apparatus 10 in the above embodiments, the specific manner in which each module performs an operation has been described in detail in the embodiments relating to the method, which will not be described in detail herein.

The communication apparatus 10 provided in the above embodiments of the present disclosure achieves the same or similar beneficial effects as the method for configuring a gap configuration provided in some of the above embodiments, which will not be described in detail herein.

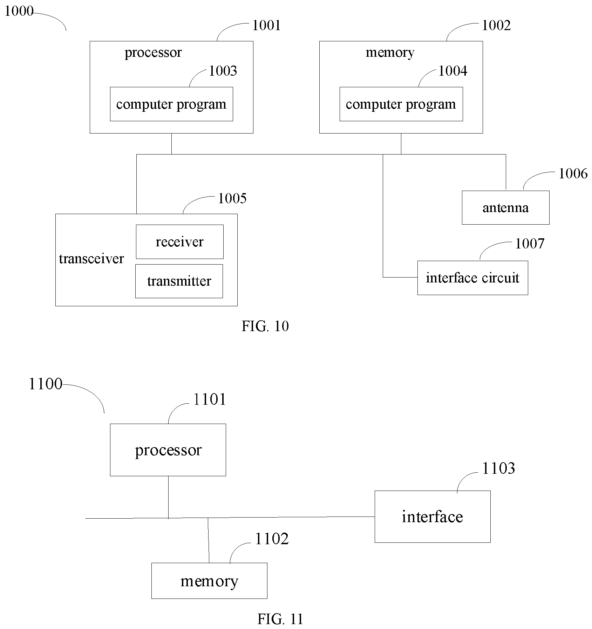

Referring to FIG. 10, it is a structure diagram illustrating another communication device 1000 according to embodiments of the present disclosure. The communication device 1000 may be a network device, a terminal device, or a chip, a system on chip or a processor that supports the network device to implement the method, or a chip, a system on chip or a processor that supports the terminal device to implement the method. The device may be configured to implement the method described in the method embodiments, and may refer to descriptions in the method embodiments.

The communication device 1000 may include one or more processors 1001. The processor 1001 may include a general purpose processor or a dedicated processor. For example, the processor 141 may be a baseband processor or a central processor. The baseband processor may be configured to process a communication protocol and communication data, and the central processor may be configured to control a communication device (e.g., a base station, a baseband chip, a terminal device, a terminal device chip, a DU or CU, etc.), to execute a computer program, and process data of the computer program.

Alternately, the communication device 1000 may further include one or more memories 1002 with a computer program 1004 stored. The memory 1002 executes the computer program 1004 so that the communication device 1000 performs the method as described in the above method embodiments. Alternately, the memory 1002 may further store data. The communication device 1000 and the memory 1002 may be independently configured or integrated together.

Alternately, the communication device 1000 may further include a transceiver 1005 and an antenna 1006. The transceiver 1005 may be referred to as a transceiving unit, a transceiver or a transceiving circuit, which may be configured to achieve a transceiving function. The transceiver 1005 may include a receiver and a transmitter. The receiver may be referred to as a receiving machine or a receiving circuit, etc., for implementing a receiving function; the transmitter may be referred to as a transmitting machine or a transmitting circuit, etc. for implementing a transmitting function.

Alternately, the communication device 1000 may further include one or more interface circuits 1007. The interface circuit 1007 is configured to receive code instructions and transmit the code instructions to the processor 1001. The processor 1001 runs the code instructions so that the communication device 1000 performs the method according to the above method embodiments.

When the communication device 1000 is a terminal device, the transceiver 1005 is configured to execute the step S21 in FIG.2, the step S31 in FIG. 3, or the step S41 in FIG. 4; the processor 1001 is configured to execute the step S22 in FIG. 2, the step S32 in FIG. 3, or the step S42 in FIG. 4.

When the communication device 1000 is a network device, the transceiver 1005 is configured to execute the step S51 in FIG.5, or the step S61 in FIG. 6.

In an implementation, the processor 1001 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1001 may be stored with a computer program 1003. The computer program 1003 runs on the processor 1001 so that the communication device 1000 performs the method as described in the above method embodiments. The computer program 1003 may be solidified in the processor 1001, in which case the processor 1001 may be implemented by hardware.

In an implementation, the communication device 1000 may include a circuit that may implement a transmitting or receiving or communication function in the above method embodiments. The processor and the transceiver described in the present disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a terminal device, which is not limited in the scope of the communication device described in the present disclosure, and a structure of the communication device may not be subject to FIG. 10. The communication device may be a stand-alone device or may be a part of a larger device. For example, the communication device may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle-mounted device, a network device, a cloud device, an artificial intelligence device, etc.; and
(6) others, and so forth.

In the case that the communication device may be a chip or a system on chip, please refer to a structure diagram of a chip as illustrated in FIG. 11.

The chip 1100 includes a processor 1101 and an interface 1103, in which the number of processors 1101 may be one or more and the number of interfaces 1103 may be one or more.

In the case where the chip is used to implement the functionality of a terminal device in an embodiment of the present disclosure: the interface 1103 is configured to receive code instructions and send the code instructions to the processor. The processor 1101 is configured to run the code instructions to perform a method for configuring a gap as described in some embodiments above.

In the case where the chip is used to implement the functionality of a network device in an embodiment of the present disclosure, the interface 1103 is configured to receive code instructions and send the code instructions to the processor. The processor 1101 is configured to run the code instructions to perform a method for configuring a gap as described in some embodiments above.

Alternately, the chip 1100 further includes a memory 1102, configured to save a necessary computer program and data.

Those skilled in the related art may understand that, various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as going beyond the protection scope of embodiments of the present disclosure.

A system for location information updating is further provided in embodiments of the disclosure. The system includes a communication device as a terminal device and a communication device as a network device in the preceding embodiment of FIG. 7. Alternatively, the system includes a communication device as a terminal device and a communication device as a network device in the preceding embodiment of FIG. 10.

A readable storage medium with instructions stored is further provided in the disclosure. When the instructions are executed by a computer, steps in the any one method embodiment are implemented.

A computer program product is further provided in the disclosure. The computer program product implements the functions of the above any one method embodiment when executed by a processor.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, prestored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A method for configuring a measurement gap, applied to a terminal device, comprising:
receiving measurement configuration information from a network device, wherein the measurement configuration information comprises a plurality of configuration parameters for the measurement gap and a measurement gap sharing configuration; and
determining a usage mode of the measurement gap sharing configuration.

2. The method of claim 1, wherein determining the usage mode of the measurement gap sharing configuration, comprises:
determining an association relationship corresponding to the measurement gap; and
determining, based on the association relationship corresponding to the measurement gap, an availability of the measurement gap sharing configuration.

3. The method of claim 2, wherein determining, based on the association relationship corresponding to the measurement gap, the availability of the measurement gap sharing configuration comprises:
in response to the measurement gap being not associated with both an intra-frequency measurement and an inter-frequency measurement, or in response to the measurement gap being not associated with both the intra-frequency measurement and an inter-radio access technology (RAT) measurement, determining that the measurement gap sharing configuration is unavailable; and
in response to the measurement gap being associated with both the intra-frequency measurement and the inter-frequency measurement, or in response to the measurement gap being associated with both the intra-frequency measurement and the inter-RAT measurement, determining that the measurement gap sharing configuration is available.

4. The method of claim 2 or 3, wherein the association relationship is a frequency layer associated with the measurement gap,
in response to the frequency layer associated with the measurement gap comprising both an intra-frequency layer and an inter-frequency layer, or in response to the frequency layer associated with the measurement gap comprising both the intra-frequency layer and an inter-RAT frequency layer, the association relationship is that, the measurement gap is associated with both the intra-frequency measurement and the inter-frequency measurement, or the measurement gap is associated with both the intra-frequency measurement and the inter-RAT measurement;
in response to the frequency layer associated with the measurement gap comprising only the intra-frequency layer, or only the inter-frequency layer or the inter-RAT frequency layer, the association relationship is that, the measurement gap is not associated with both the intra-frequency measurement and the inter-frequency measurement, or the measurement gap is not associated with both the inter-frequency measurement and the inter-RAT measurement.

5. The method of claim 1, wherein determining the usage mode of the measurement gap sharing configuration, comprises:
determining a specific measurement frequency layer from a plurality of frequency layers corresponding to the measurement gap, or a specific measurement frequency point from a plurality of frequency points corresponding to the measurement gap; and
determining, based on the measurement gap sharing configuration, a measurement opportunity percentage of the specific measurement frequency layer relative to other measurement frequency layer among the plurality of frequency layers, or a measurement opportunity percentage of the specific measurement frequency point relative to other measurement frequency point among the plurality of frequency points.

6. The method of claim 5, wherein determining the specific measurement frequency layer from the plurality of frequency layers corresponding to the measurement gap, or the specific measurement frequency point from the plurality of frequency points corresponding to the measurement gap, comprises:
determining a frequency layer having an intra-frequency point among the plurality of frequency layers as the specific measurement frequency layer, or determining an intra-frequency point among the plurality of frequency points as the specific measurement frequency point.

7. The method of claim 5, wherein determining the specific measurement frequency layer from the plurality of frequency layers corresponding to the measurement gap, or the specific measurement frequency point from the plurality of frequency points corresponding to the measurement gap, comprises:
receiving configuration information from the network device, wherein the configuration information indicates the specific measurement frequency layer among the plurality of frequency layers, or the specific measurement frequency point among the plurality of frequency points; or wherein the configuration information indicates priorities of the plurality of frequency layers, or priorities of the plurality of frequency points.

8. The method of claim 5, wherein determining the specific measurement frequency layer from the plurality of frequency layers corresponding to the measurement gap, or the specific measurement frequency point from the plurality of frequency points corresponding to the measurement gap, comprises:
determining priorities of the plurality of frequency layers, or priorities of the plurality of frequency points; and
determining the specific measurement frequency layer based on the priorities of the plurality of frequency layers, or determining the specific measurement frequency point based on the priorities of the plurality of frequency points.

9. The method of claim 1, wherein each measurement gap or each measurement gap group has an independent measurement gap sharing configuration.

10. The method of claim 1, wherein each measurement gap comprises a plurality of frequency layers or a plurality of points, the measurement gap sharing configuration indicates a measurement opportunity percentage of each frequency layer of each measurement gap, or a measurement opportunity percentage of each frequency point of each measurement gap.

11. The method of claim 1, wherein the plurality of configuration parameters for the measurement gap further comprise a measurement gap configuration list.

12. The method of claim 11, wherein the measurement gap configuration list is stored in terminal device variables.

13. A method for configuring a measurement gap, applied to a network device, comprising:
sending to the terminal device, measurement configuration information for determining a usage mode of a measurement gap sharing configuration, wherein the measurement configuration information comprises a plurality of configuration parameters for the measurement gap and a measurement gap sharing configuration.

14. The method of claim 13, further comprising:
sending to the terminal device, configuration information, wherein the configuration information indicates a specific measurement frequency layer among a plurality of frequency layers, or a specific measurement frequency point among a plurality of frequency points; or wherein the configuration information indicates priorities of the plurality of frequency layers, or priorities of the plurality of frequency points.

15. The method of claim 13, wherein each measurement gap or each measurement gap group has an independent measurement gap sharing configuration.

16. The method of claim 13, wherein each measurement gap comprises a plurality of frequency layers or frequency points, the measurement gap sharing configuration indicates a measurement opportunity percentage of each frequency layer of each measurement gap, or indicates a measurement opportunity percentage of each frequency point of each measurement gap.

17. The method of claim 13, wherein the configuration parameters for the measurement gap further comprise a measurement gap configuration list.

18. The method of claim 17, wherein measurement gap configuration list is stored in terminal device variables.

19. A communication device, comprising:
a transceiver module, configured to receive measurement configuration information from a network device, wherein the measurement configuration information comprises a plurality of configuration parameters for the measurement gap and the measurement gap sharing configuration;
a processing module, configured to determine a usage mode of the measurement gap sharing configuration.

20. A communication device comprising:
a transceiver module, configured to transmit to the terminal device, measurement configuration information for determining a usage mode of the measurement gap sharing configuration, wherein the measurement configuration information comprises a plurality of configuration parameters for the measurement gap and the measurement gap sharing configuration.

21. A communication device, comprising a processor, and a memory storing a computer program, wherein when the computer program is executed by the processor, the device is caused to perform the method of any one of claims 1 to 12, or perform the method of any one of claims 13 to 18.

22. A communication device comprises: a processor and an interface circuit;
the interface circuit is configured to receive code instructions and transmit code instructions to the processor; and
the processor is configured to execute the code instructions to implement the method of any one of claims 1 to 12, or implement the method of any one of claims 13 to 18.

23. A computer-readable storage medium for storing instructions, wherein when the instructions are executed, the method of any one of claims 1 to 12 or the method of any one of claims 13 to 18 is implemented.
